Europäisches Patentamt

European Patent Office

Office européen des brevets

(11) Veröffentlichungsnummer : **0 035 737**
**B1**

## (12) EUROPÄISCHE PATENTSCHRIFT

(45) Veröffentlichungstag der Patentschrift :
26.10.83

(21) Anmeldenummer : 81101517.1

(22) Anmeldetag : 03.03.81

(51) Int. Cl.³ : **H 02 G 15/18**

(54) **Längsgeteilte Kabelmuffe aus schrumpfbarem Material.**

(30) Priorität : **10.03.80 DE 3009078**

(43) Veröffentlichungstag der Anmeldung :
**16.09.81 Patentblatt 81/37**

(45) Bekanntmachung des Hinweises auf die Patenterteilung : **26.10.83 Patentblatt 83/43**

(84) Benannte Vertragsstaaten :
**AT BE CH DE FR GB IT LI LU NL SE**

(56) Entgegenhaltungen :
**DE A 2 832 485**
**FR A 1 499 592**
**GB A 2 019 123**
**US A 3 542 077**

(73) Patentinhaber : **SIEMENS AKTIENGESELLSCHAFT**
**Berlin und München Wittelsbacherplatz 2**
**D-8000 München 2 (DE)**

(72) Erfinder : **Kunze, Dieter, Dipl.-Ing.**
**Rosenstrasse 10**
**D-8027 Neuried (DE)**

EP 0 035 737 B1

## Längsgeteilte Kabelmuffe aus schrumpfbarem Material

Die Erfindung betrifft eine längsgeteilte Kabelmuffe aus schrumpfbarem Material in Form einer bandförmigen Manschette mit einem Verschlußsystem entlang der Ränder aus längsverlaufenden Wülsten und einer diese Wülste überspannenden Verschlußschiene entlang der Längsteilung.

Aus der DE-B-15 25 815 ist nun ein länglicher schlauchförmiger Hüllmantel aus thermoplastischem Kunststoff mit einem Formgedächtnis bekannt, der mit einer Längsteilung versehen ist. Entlang der Ränder dieser Längsteilung ist ein geteilter Wulst angeordnet, der von einer C-förmigen Klammer umfaßt und dichtend zusammengepreßt wird. Diese Art von Verschlußsystemen haben nun den Nachteil, daß die Wülste an den Manschettenrändern eine relativ große Hinterschneidung haben müssen, damit die Wülste während des Schrumpfvorganges nicht aus der durch die C-förmige Verschlußschiene vorgegebenen Verankerung herausrutschen. Diese Maßbedingungen führen zu groß auftragenden Verschlußbereichen, die unter Umständen hinderlich sind. Dies tritt zum Beispiel besonders bei Reparaturarbeiten an Kabelmänteln oder bei schlank auszuführenden Kabelmuffen auf. Ein weiterer Nachteil dieser relativ dicken Verschlußbereiche ist außerdem darin zu sehen, daß die Wärmezufuhr in diesen Verschlußbereichen behindert wird und daß damit das Dichtmittel unter Umständen zum Kabel hin nicht genügend aktiviert wird. Die Verwendung von Schmelzklebern zur Abdichtung der Verschlußsysteme in diesen Bereichen führt somit nur zu unbefriedigenden Ergebnissen. Andererseits ist bei kräftiger Erwärmung des Verschlußbereiches nicht völlig auszuschließen, daß bei den Wülsten Verformungen auftreten können, die zum Ausrasten der Wülste aus der Verklammerung führen.

Die Aufgabe der Erfindung bestand nun darin, ein nur gering auftragendes Verschlußsystem bei längsgeteilten Kabelmuffen aus schrumpfbarem Material zu schaffen, bei dem gewährleistet ist, daß trotz guter Wärmeleitung in die Verschlußbereiche für das Einschmelzen einer Kleberbeschichtung die Formbeständigkeit der einzelnen Verschlußelemente gegeben ist.

Die gestellte Aufgabe wird nun gemäß der Erfindung bei der eingangs beschriebenen Kabelmuffe dadurch gelöst, daß nicht schrumpfbare, längsverlaufende Verstärkungsmittel im Inneren der Wülste angeordnet sind, daß die Verschlußschiene den Querschnitt von zwei gegeneinander gestellten C-Profilen mit einem gemeinsamen Mittelsteg aufweist, daß jeweils zwei nach einer Seite vom Mittelsteg abstehende Enden der Verschlußschiene eine hinterschnittene Nut bilden und daß in jeder Nut jeweils ein Wulst der Manschette eingeführt ist.

Bei einem solchen Verschlußsystem liegt nun ein Vorteil darin, daß in den an den Rändern der schrumpfbaren Manschette angeordneten Wülsten bei Schrumpftemperatur nicht schrumpfbare Verstärkungselemente eingebettet sind. Hierdurch wird erreicht, daß die auftretenden Schrumpfkräfte mit Sicherheit nicht zum Ausrasten des Verschlusses führen. Diese Verstärkungsmittel sind längsverlaufend in den Wülsten angeordnet und sind so stark, daß sie aus der C-förmigen Umklammerung der Verschlußschiene seitlich nicht ausrasten können. Die Verschlußschiene besteht aus zwei längsverlaufenden, gegeneinandergestellten C-Profilen mit einem gemeinsamen Mittelsteg, wobei von jedem C-Profil, das eine hinterschnittene Nut bildet, jeweils nur ein Wulst der Manschette umfaßt wird. Dies hat den Vorteil, daß jeweils nur die Verformung eines Wulstes, der zudem erfindungsgemäß durch die Verstärkungsmittel gefestigt wird, zu betrachten ist. Außerdem ist die Öffnung des C-Profiles gerade so bemessen, daß die Manschette in Längsrichtung einführbar ist. Die Wülste oder auch die Verschlußschienen sind in diesem Dichtungsbereich mit einem Kleber, insbesondere mit einem Schmelzkleber beschichtet, der während des Schrumpfvorganges schmilzt und somit eine sichere Abdichtung gewährleistet. Hierzu trägt auch die Ausbildung der Verschlußschiene bei, die aus gut wärmeleitendem und bei Schrumpftemperatur nicht veränderlichem Material besteht, so daß, unterstützt durch die Ausdehnung der Verschlußschiene ins Innere des Verschlußbereiches über den Mittelsteg, eine äußerst gute Wärmeleitung gegeben ist. Dadurch ist sichergestellt, daß der Schmelzkleber auch in den sonst schwer zugänglichen Bereichen des Verschlußsystems bis zum Schmelzzustand ausreichend erwärmt wird. Durch entsprechende einseitige Ausbildung der Wülste und Anordnung von mehreren parallel verlaufenden Wülsten dieser Art ist es möglich, daß mit einer einzigen Manschettentype ein großer Durchmesserbereich überdeckt werden kann. Zur erforderlichen Anpassung wird die Manschette nur entlang eines Wulstes beschnitten und damit ist automatisch ein kleinerer Durchmesser als vor der Beschneidung gegeben. Es genügt also, die Breite der Manschette für den größtmöglichen Durchmesser vorzugeben, die kleineren Typen können dann durch Beschneidung dieser Manschette hergestellt werden. Die Form der Verschlußschiene kann auch für verschiedene Anwendungsbereiche modifiziert werden, indem die inneren Enden der C-Profile kreisbogenförmig ausgebildet werden, um sie besser der Kabelform anzupassen. Für besonders flexible Verschlußsysteme wird die Verschlußschiene mit quer verlaufenden, nicht durchgehenden Schlitzen versehen, so daß die Verschlußschiene in der Längsrichtung biegbar wird. Außerdem werden die Innenwände der Manschette selbst, die Wülste an den Rändern im Verschlußbereich und die Verschlußschiene zweckmäßigerweise mit einer Schmelzkleberbeschichtung versehen, um die erforderliche Dichtigkeit zu verbessern.

Die Erfindung wird nun anhand von acht Figuren näher erläutert.

Figur 1 zeigt eine Kabelmuffe mit dem erfindungsgemäßen Verschlußsystem in montiertem Zustand.

Figur 2 und Figur 3 zeigen Ausbildungen von Manschetten mit Wülsten für den Verschluß.

Figur 4 zeigt eine als Rohr durch Extrusion hergestellte Manschette.

Figuren 5 bis 8 zeigen Ausführungsbeispiele für die Verschlußschiene.

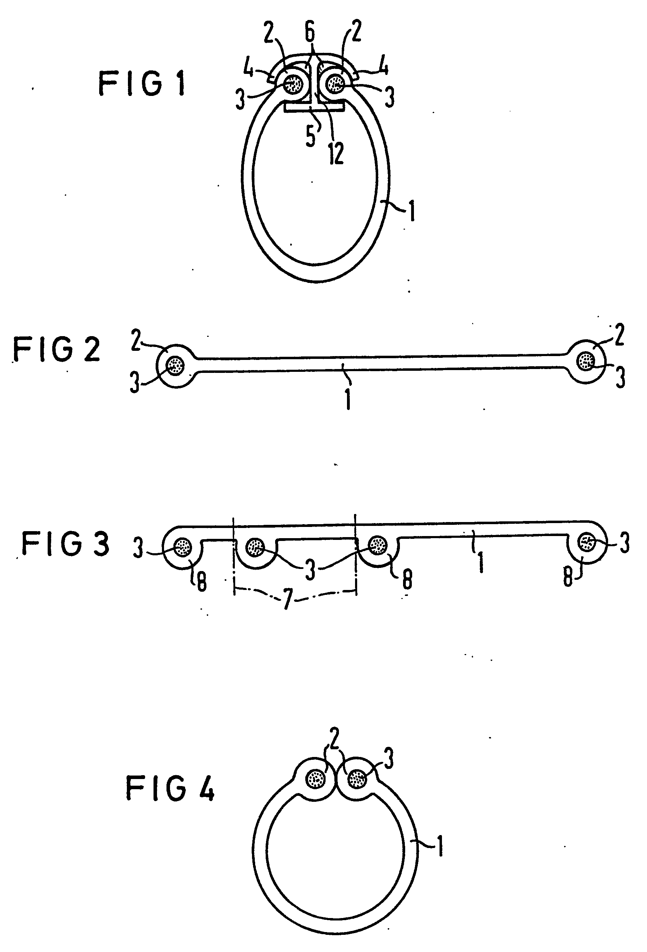

Die in Figur 1 gezeigte Kabelmuffe gemäß der Erfindung ist in montiertem Zustand dargestellt, das heißt, das Verschlußsystem ist in der endgültigen Form zusammengesetzt. Dabei ist zu erkennen, daß die schrumpfbare Manschette 1, die auch als Muffenrohr angesehen werden kann, an den Enden zum Beispiel kreisförmige Wülste 2 aufweist. In diesen Wülsten 2 sind gemäß der Erfindung längsverlaufende Verstärkungsmittel 3 eingebettet, die bei Schrumpftemperatur keine nennenswerte Veränderung erfahren. Diese Verstärkungsmittel 3 können als Stäbe, Drähte, Seile oder Fasern aus geeigneten Materialien, wie Stahl, Aluminium, Glas oder auch wärmebeständigem Kunststoff ausgebildet sein. Wichtig ist bei der Auswahl in der Form, wie auch im Material, daß bei Schrumpftemperatur keine Veränderung stattfindet, die zu einer Querschnittsverminderung führt, da sonst wiederum die Gefahr des Ausrastens aus dem Verschlußsystem besteht. Die Manschette 1, bzw. das Muffenrohr, ist zweckmäßigerweise auf der nach innen weisenden Seite mit einem Kleber, am besten bei Schrumpftemperatur aktivierbarem Schmelzkleber, beschichtet, so daß während des Schrumpfvorganges sogleich die endgültige Abdichtung erfolgt. Aus der Figur 1 wird auch deutlich, daß die Wülste 2 in einer Verschlußschiene 4-5-12 gehalten werden. Dabei ist zu beachten, daß die beiden Wülste 2 einzeln gehalten werden und nicht zusammen, wie im Stand der Technik eingangs erwähnt wurde. Dies hat den Vorteil, daß durch den Mittelsteg 12 der Verschlußschiene 4-5-12 eine bessere Wärmezufuhr zu den darunter liegenden Dichtungsbereichen ermöglicht wird. Bei Schrumpftemperatur wirken infolge des Aufschrumpfens der Manschette 1 auf das Kabel in Umfangrichtung Schrumpfkräfte, die versuchen, die erweichten Wülste 2 aus der Halterung zu ziehen. Durch die Ausbildung der Verschlußschiene 4-5-12 mit hinterschnittenen Nuten 6 in Form eines C-Profiles und durch die Einlage der bereits beschriebenen Verstärkungsmittel 3 wird dies verhindert. Durch die wirkenden Schrumpfkräfte werden die erweichten Wülste 2 jedoch so deformiert, daß sie sich dichtend in die Nuten 6 einpressen, wobei die Beschichtung mit Schmelzkleber von besonderem Vorteil ist. Bei der Ausbildung der hinterschnittenen Nuten 6 ist nun wichtig, daß die Enden 4 und 5 so weit zusammengezogen sind, daß die Manschette 1 im Bereich nach den Wülsten 2 einzuführen ist, daß jedoch die Wülste 2 mit ihren eingebetteten Verstärkungsmitteln 3 nicht ausrasten können. Die Verschlußschiene 4-5-12 ist nun zum Fassen der beiden Wülste 2 als symmetrisches Doppel-C-Profil ausgebildet, wobei die C-Formen gegeneinander gestellt sind und über einen gemeinsamen Mittelsteg 12 miteinander verbunden sind. Dieser Mittelsteg 12 hat nun bezüglich der Wärmeleitung eine besondere Funktion; er dient nämlich während des Schrumpfvorganges als guter Wärmeleiter zu den inneren Teilen des Verschlußsystems. Hierdurch wird gewährleistet, daß auch in den inneren Bereichen der Schmelzkleber voll und sicher aktiviert wird.

Figur 2 zeigt nun eine Manschette 1 bzw. ein Muffenrohr, das in einfacher Bandform gefertigt werden kann, wobei die längsverlaufenden Ränder als Wülste 2 mit den eingebetteten Verstärkungsmitteln 3 ausgebildet sind. Die Wülste 2 sind hier kreisförmig ausgebildet.

Figur 3 zeigt eine Möglichkeit, wie man mit einer einzigen Manschettentype einen größeren Durchmesserbereich erfassen kann. Hier sind allerdings die Wülste 8 nur einseitig ausgebildet, doch sind hiervon mehrere parallel verlaufend in geeigneten Abständen voneinander angeordnet. Die Manschette 1 ist nun zunächst in ihrer Breite auf den größtmöglichen Durchmesser abgestimmt. Bei kleineren Durchmessern wird dann die Manschette 1 jeweils um die erforderliche Breite entlang eines Wulstes 8, wie die Schnittränder 7 andeuten, beschnitten. Damit ist die Manschette nicht mehr so breit wie ursprünglich und ist somit dem kleineren Durchmesser eines Kabels angepaßt.

Figur 4 deutet an, wie eine Manschette 1 mit den Wülsten 2 und den eingebetteten Verstärkungsmitteln 3 durch Extrusion in Form eines Rohres hergestellt werden kann. Im Anschluß an den Herstellungsvorgang dieses Rohres werden die beiden Wülste 2 durch einen längsverlaufenden Schnitt getrennt.

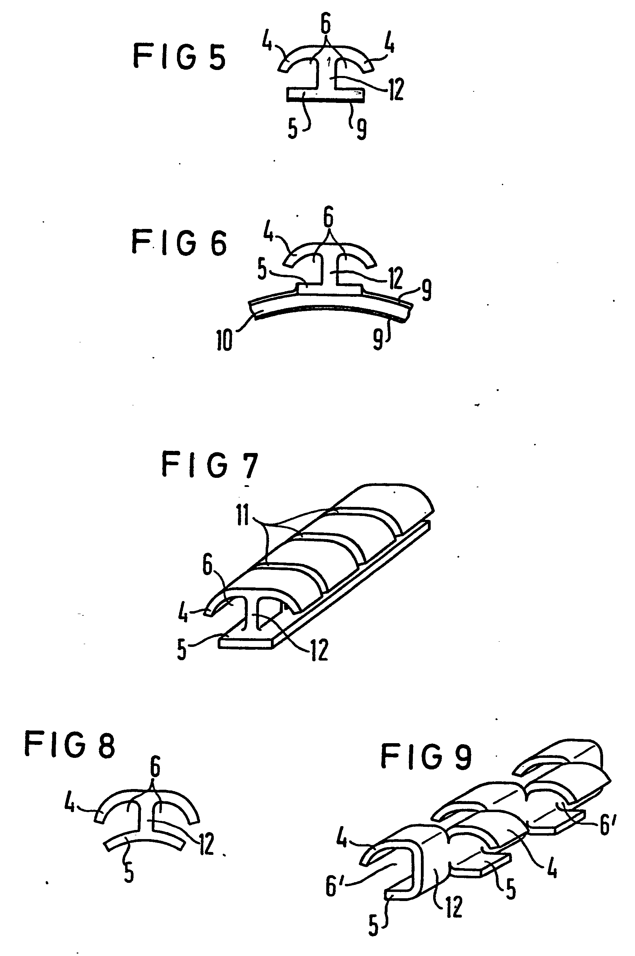

Figur 5 zeigt nun eine Verschlußschiene 4-5-12 gemäß der Erfindung. Hier werden die beiden gegeneinander gestellten C-Profile, die schließlich die hinterschnittenen Nuten 6 bilden, deutlich, wobei sie über einen gemeinsamen Mittelsteg 12 miteinander verbunden sind. Die Enden 4 und 5 sind so weit zusammengezogen, daß sie die bereits beschriebenen Bedingungen bezüglich der Wülste 2 erfüllen. Die Unterseite der Verschlußschiene 2 mit den Enden 5 ist mit einer Kleberbeschichtung 9 vorzugsweise aus Schmelzkleber beschichtet. Auf diese Weise wird während des Schrumpfvorgangs eine Festlegung zwischen der Verschlußschiene 4-5-12 und dem Kabelmantel, einem Dichtungskörper einer Kabelmuffe oder ähnlichem hergestellt.

Figur 6 zeigt ebenfalls eine Verschlußschiene 4-5-12 mit ihren beiden hinterschnittenen Nuten 6, wobei diese auf der Unterseite zur Verbesserung der Dichtwirkung mit einem mit Kleber beschichteten Kunststoffband versehen ist. Besonders geeignet ist hierfür das gleiche Material, aus dem die Manschette besteht, da hierdurch auch in diesem Bereich ähnliche Verhältnisse wie am übrigen Umfang erreicht werden.

Die Figur 7 stellt eine Verschlußschiene 4-5-12 in flexibler Ausführung dar. Hier sind die oberen Enden 4 und der Mittelsteg 12 bis zur Unterseite mit den Enden 5 in geeigneten Abständen, durch die die Flexibilität bestimmt ist, mit quer verlaufenden Schlitzen 11 versehen. Dadurch kann die Verschlußschiene 4-5-12, die nunmehr nur ein durchgehendes Band aufweist, entsprechend den Biegungen angepaßt werden.

In der Figur 8 wird noch eine Ausführungsform einer Verschlußschiene 4-5-12 dargestellt, deren Unterseite mit den Enden 5 kreisbogenförmig ausgebildet ist, um eine bessere Anpassung an die Form eines Kabels zu erreichen.

Die Figur 9 zeigt nun ein Beispiel für eine Verschlußschiene 4-5-12, die als Stanz- und Biegeteil aus einem Blechstreifen in einfacher Weise herzustellen ist. Ein Blechstreifen wird hierzu in geeigneten Abständen von beiden Seiten her mit Einschnitten versehen, wobei in der Mitte ein Abstand verbleibt, der in seiner Breite der späteren Höhe bzw. Nut 6 der Verschlußschiene 4-5-12 entspricht. Nach diesem Einschneiden werden jeweils paarweise zwei gegenüberliegende Abschnitte als Enden 4 und 5 für eine hinterschnittene Nut nach einer Seite hin umgebogen. Die beiden nächsten sich gegenüberliegenden Abschnitte werden ebenfalls als Enden 4 und 5 umgebogen, jedoch auf die andere Seite des in der Mitte verbleibenden Mittelsteges 12. Dieser Wechsel wird weiter geführt, so daß sich auf diese Weise eine Verschlußschiene 4-5-12 mit wechselseitig versetzten Teilnuten 6' ergibt. Die Länge dieser Teilnuten 6' muß so gewählt werden, daß die eingeführten Wülste 2 der Manschette 1 durch die in Umfangrichtung wirkenden Kräfte sicher gehalten werden.

**Ansprüche**

1. Längsgeteilte Kabelmuffe (1) aus schrumpfbarem Material in Form einer bandförmigen Manschette (1) mit einem Verschlußsystem entlang der Ränder aus längsverlaufenden Wülsten (2) und einer diese Wülste überspannenden Verschlußschiene (4-5-12) entlang der Längsteilung, dadurch gekennzeichnet, daß nicht schrumpfbare längsverlaufende Verstärkungsmittel (3) im Inneren der Wülste (2, 8) angeordnet sind, daß die Verschlußschiene (4-5-12) den Querschnitt von zwei gegeneinandergestellten C-Profilen mit einem gemeinsamen Mittelsteg (12) aufweist, daß jeweils zwei nach einer Seite vom Mittelsteg (12) abstehende Enden (4, 5) der Verschlußschiene (4-5-12) eine hinterschnittene Nut (6) bilden und daß in jeder Nut (6) jeweils ein Wulst (2, 8) der Manschette (1) eingeführt ist.

2. Längsgeteilte Kabelmuffe nach Anspruch 1, dadurch gekennzeichnet, daß die Verstärkungsmittel (3) in den Wülsten (2, 8) jeweils aus einem Stab gebildet sind.

3. Längsgeteilte Kabelmuffe nach Anspruch 1, dadurch gekennzeichnet, daß in den Wülsten (2, 8) als Verstärkungsmittel (3) jeweils mehrere Drähte oder ein Seil eingebettet sind.

4. Längsgeteilte Kabelmuffe nach einem der vorhergehenden Ansprüche, dadurch gekennzeichnet, daß die Wülste (2) an den Rändern der Manschette (1) beidseitig überstehend ausgebildet sind.

5. Längsgeteilte Kabelmuffe nach einem der Ansprüche 1 bis 3, dadurch gekennzeichnet, daß die Wülste (8) an den Rändern der Manschette (1) nur einseitig überstehend ausgebildet sind.

6. Längsgeteilte Kabelmuffe nach Anspruch 5, dadurch gekennzeichnet, daß mehrere einseitig überstehende Wülste (8) entlang der Manschette (1) angeordnet sind und daß die Manschette (1) entlang der Wülste (8) durch Schnitte (7) abtrennbar ist.

7. Längsgeteilte Kabelmuffe nach einem der vorhergehenden Ansprüche, dadurch gekennzeichnet, daß die Verstärkungsmittel (3) und die Verschlußschiene (4-5-12) aus einem Kunststoff bestehen, der bei Schrumpftemperatur der Manschette (1) nicht erweicht.

8. Längsgeteilte Kabelmuffe nach einem der vorhergehenden Ansprüche, dadurch gekennzeichnet, daß die Verschlußschiene (4-5-12) aus einem gut wärmeleitfähigem Material besteht.

9. Längsgeteilte Kabelmuffe nach einem der vorhergehenden Ansprüche, dadurch gekennzeichnet, daß die inneren abstehenden Enden (5) der Verschlußschiene (4-5-12) kreisbogenförmig ausgebildet sind.

10. Längsgeteilte Kabelmuffe nach einem der vorhergehenden Ansprüche, dadurch gekennzeichnet, daß die Innenwände der Manschette (1) und die Wülste (2, 8) eine Schmelzkleberschicht (9) aufweisen.

11. Längsgeteilte Kabelmuffe nach einem der vorhergehenden Ansprüche, dadurch gekennzeichnet, daß die Enden (5) der Verschlußschiene (4-5-12) auf den ins Innere der Muffe weisenden Seiten eine Schmelzkleberschicht aufweisen.

12. Längsgeteilte Kabelmuffe nach einem der vorhergehenden Ansprüche, dadurch gekennzeichnet, daß auf den ins Innere der Muffe weisenden Seiten der Enden (5) der Verschlußschiene (4-5-12) ein kleberbeschichtetes Band aufgebracht ist.

13. Längsgeteilte Kabelmuffe nach einem der vorhergehenden Ansprüche, dadurch gekennzeichnet, daß die Verschlußschiene (4-5-12) bis auf die Enden (5) mit querverlaufenden Schlitzen (11) versehen ist.

14. Längsgeteilte Kabelmuffe nach einem der Ansprüche 1 bis 12, dadurch gekennzeichnet, daß die C-Profile mit den abstehenden Enden (4-5) am Mittelsteg (12) der Verschlußschiene (4-5-12) abschnittsweise, wechselseitig versetzt und Teilnuten (6') bildend angeordnet sind.

**Claims**

1. A longitudinally-divided cable box (1) made of shrinkable material in the form of a strip-shaped sleeve (1) having a sealing system along its edges in the form of longitudinally extending beads (2), and a sealing strip (4-5-12), which covers these beads along the longitudinal division, characterised in that non-shrinkable, longitudinally extending reinforcing means (3) are provided within the beads (2, 8) ; that the sealing strip (4-5-12) has a cross-section in the form of two C-shaped profiles which are arranged face to face and are provided with a commun central arm (12) ; that two edges (4, 5) which project on each side of the central arm (12) of the sealing bar (4-5-12) form respective undercut grooves (6) ; and that a bead (2, 8) of the sleeve (1) is introduced into each groove (6).

2. A longitudinally-divided cable box as claimed in Claim 1, characterised in that the reinforcing means (3) in the beads (2, 8) in each case consists of a rod.

3. A longitudinally-divided cable box as claimed in Claim 1, characterised in that a plurality of wires or a cable is embedded in each of the beads (2, 8) as reinforcing means (3).

4. A longitudinally-divided cable box as claimed in one of the preceding Claims, characterised in that the beads (2) at the edges of the sleeve (1) project on both sides.

5. A longitudinally-divided cable box as claimed in one of Claims 1 to 3, characterised in that the beads (8) at the edges of the sleeve (1) project on one side only.

6. A longitudinally-divided cable box as claimed in Claim 5, characterised in that a plurality of beads (8) which project on one side only are arranged along the sleeve (1), and that the sleeve (1) can be separated along the beads (8) by means of cuts (7).

7. A longitudinally-divided cable box as claimed in one of the preceding Claims, characterised in that the reinforcing means (3) and the sealing strip (4-5-12) consist of a synthetic resin material which does not soften at the shrinkage temperature of the sleeve (1).

8. A longitudinally-divided cable box as claimed in one of the preceding Claims, characterised in that the sealing strip (4-5-12) consists of a good heat conducting material.

9. A longitudinally-divided cable box as claimed in one of the preceding Claims, characterised in that the inner projecting edges (5) of the sealing strip (4-5-12) are arcuate.

10. A longitudinally-divided cable box as claimed in one of the preceding Claims, characterised in that the inner walls of the sleeve (1) and the beads (2, 8) are provided with a fusible adhesive layer (9).

11. A longitudinally-divided cable box as claimed in one of the preceding Claims, characterised in that the edges (5) of the sealing strip (4-5-12) are provided with a fusible adhesive layer on the sides which point towards the inside of the cable box.

12. A longitudinally-divided cable box as claimed in one of the preceding Claims, characterised in that an adhesive-coated strip is applied to those sides of the edges (5) of the sealing strip (4-5-12) which point towards the interior of the cable box.

13. A longitudinally-divided cable box as claimed in one of the preceding Claims, characterised in that the sealing strip (4-5-12) is provided with transverse slots (11) up to the edges (5).

14. A longitudinally-divided cable box as claimed in one of Claims 1 to 12, characterised in that the C-profiles together with the projecting edges (4-5) are arranged on the central arm (12) of the sealing strip (4-5-12) in sections, so as to form mutually offset part grooves (6').

## Revendications

1. Manchon de câble (1) fendu longitudinalement, en matériau rétractable, sous forme d'une gaine (1) en forme de bande ayant, le long des bords, un système de fermeture constitué de bourrelets (2) s'étendant longitudinalement et d'un rail de fermeture (4-5-12) recouvrant ces bourrelets le long de la fente longitudinale, caractérisé en ce que des moyens de renforcement (3) non rétractables, s'étendant longitudinalement, sont disposés à l'intérieur des bourrelets (2, 8), en ce que le rail de fermeture (4-5-12) présente la section transversale de deux profilés en C opposés ayant une âme centrale (12) commune, en ce que deux extrémités (4, 5) du rail de fermeture (4-5-12) en saillie d'un côté de l'âme centrale (12) forment une gorge (6) en contre-dépouille et en ce que dans chaque gorge (6) est introduit un bourrelet (2, 8) de la gaine (1).

2. Manchon de câble fendu longitudinalement suivant la revendication 1, caractérisé en ce que les moyens de renforcement (3) dans les bourrelets (2, 8) sont constitués respectivement d'un barreau.

3. Manchon de câble fendu longitudinalement suivant la revendication 1, caractérisé en ce que plusieurs fils métalliques ou un câble sont noyés comme moyens de renforcement (3) dans les bourrelets (2, 8).

4. Manchon de câble fendu longitudinalement suivant l'une des revendications précédentes, caractérisé en ce que les bourrelets (2) sont formés en saillie des deux côtés sur les bords de la gaine (1).

5. Manchon de câble fendu longitudinalement suivant l'une des revendications 1 à 3, caractérisé en ce que les bourrelets (8) sont formés en saillie d'un côté sur les bords de la gaine (1).

6. Manchon de câble fendu longitudinalement suivant la revendication 5, caractérisé en ce que plusieurs bourrelets (8) en saillie d'un côté sont disposés le long de la gaine (1) et en ce que la gaine (1) peut être sectionnée le long des bourrelets (8) grâce à des découpes (7).

7. Manchon de câble fendu longitudinalement suivant l'une des revendications précédentes, caractérisé en ce que les moyens de renforcement (3) et le rail de fermeture (5, 4, 12) sont en une matière plastique qui ne se ramollit pas à la température de retrait de la gaine (1).

8. Manchon de câble fendu longitudinalement suivant l'une des revendications précédentes, caractérisé en ce que le rail de fermeture (4, 5, 12) est en un matériau bon conducteur de la chaleur.

9. Manchon de câble fendu longitudinalement l'une des revendications précédentes, caractérisé en ce que les extrémités intérieures en saillie (5) du rail de fermeture (4, 5, 12) sont en forme d'arc de cercle.

10. Manchon de câble fendu longitudinalement suivant l'une des revendications précédentes, caractérisé en ce que les parois intérieures de la gaine (1) et les bourrelets (2, 8) présentent une couche (9) de colle fusible.

11. Manchon de câble fendu longitudinalement suivant l'une des revendications précédentes, caractérisé en ce que les extrémités du rail de fermeture (4, 5, 12) présentent une couche de colle fusible sur les parties se trouvant du côté de l'intérieur du manchon.

12. Manchon de câble fendu longitudinalement suivant l'une des revendications précédentes, caractérisé en ce que sur les parties des extrémités (5) du rail de fermeture (4, 5, 12) se trouvant du côté de l'intérieur du manchon est déposée un ruban adhésif.

13. Manchon de câble fendu longitudinalement suivant l'une des revendications précédentes, caractérisé en ce que le rail de fermeture (4, 5, 12) est muni, sauf aux extrémités (5), de fentes (11) s'étendant transversalement.

14. Manchon câble fendu longitudinalement suivant l'une des revendications 1 à 12, caractérisé en ce que les profilés en C ayant les extrémités (4, 5) en saillie sont disposés par section sur l'âme centrale (12) du rail de fermeture (4, 5, 12), en étant décalés alternativement et en formant des gorges partielles (6').

0 035 737

FIG 1

FIG 2

FIG 3

FIG 4

FIG 5

FIG 6

FIG 7

FIG 8

FIG 9